# FASCICULE DE BREVET EUROPEEN

(11) **EP 4 500 038 B1**
(45) Date de publication et mention de la délivrance du brevet: **27.05.2026**
(21) Numéro de dépôt: 23712208.0
(22) Date de dépôt: 16.03.2023
(51) Int. Cl.: F16B 39/06, B64C 1/14

(54) **ORGANE DE REGLAGE A VERROUILLAGE AUTOMATIQUE D'UN SYSTEME MECANIQUE**
VORRICHTUNG ZUR AUTOMATISCHEN VERRIEGELUNG EINES VERSTELLBAREN MECHANISCHEN SYSTEMS
DEVICE FOR THE AUTOMATIC LOCKING OF AN ADJUSTABLE MECHANICAL SYSTEM

(30) Priorité: 24.03.2022 FR 2202604
(43) Date de publication de la demande: 05.02.2025
(73) Titulaire: Latecoere, 31500 Toulouse (FR)
(72) Inventeur: GRI, Philippe, 31180 Saint Geniès Bellevue (FR)
(74) Mandataire: Junca, Eric
(86) Numéro de dépôt international: PCT/EP2023/056744
(87) Numéro de publication internationale: WO 2023/180166

(56) Documents cités:
- ES-U- 1 050 610
- US-A- 1 576 062
- US-A- 1 845 428
- US-A- 530 083
- US-A1- 2015 368 949

## Description

L'invention se rapporte à un dispositif destiné à assurer le verrouillage et/ou le blocage automatique d'un système mécanique dans sa position finale de réglage. L'invention se rapporte aussi à un système mécanique équipé de ce dispositif.

Plus particulièrement, cette invention s'applique à des systèmes mécaniques dont la position, d'au moins certains de ses composants, peut être modifiée de façon réversible au moyen d'un organe de réglage fileté et qui nécessite d'être verrouillée en fin de réglage. De tels systèmes sont, par exemple, des ouvrants (portes, trappes, ...) dont la position relativement à un bâti d'encadrement doit être ajustée, avant ou après montage, au moyen d'un organe de réglage associé afin d'assurer des cinématiques d'ouverture et de fermeture correctes et une étanchéité finale satisfaisante.

Traditionnellement, le verrouillage des éléments filetés destinés au réglage des systèmes mécaniques est assuré, par exemple, par des contre-écrous vissés sur cet élément, des goupilles fendues, des fils-frein, des rondelles à plier, ...

Toutefois, dans certaines situations, l'espace disponible dans l'environnement de l'élément de réglage est insuffisant pour monter et/ou manœuvrer correctement le dispositif de verrouillage qui lui est associé et qui est destiné à sécuriser les opérations de réglage, en particulier, lorsqu'il est nécessaire d'utiliser un outillage spécifique qui est souvent encombrant. Un organe de réglage à verrouillage automatique est connu de US 1 845 428 A.

### EXPOSE DE L'INVENTION

Dans ce contexte, l'invention a pour objectif principal d'assurer, de façon automatique, le verrouillage ou le blocage mécanique d'un organe de réglage fileté au moyen d'un simple outil manuel et en n'ayant besoin que d'un espace très restreint autour de cet élément.

Ce but est atteint, selon l'invention, au moyen d'un organe de réglage à verrouillage automatique d'un système mécanique selon la revendication 1.

Selon l'invention, le bouton-poussoir comporte une concavité interne de profil cylindro-conique dont la paroi prend appui sur les branches latérales de l'épingle.

Selon une variante de réalisation spécifique, les branches latérales de l'épingle forment un épaulement entre des brins d'extrémité distale qui sont non-parallèles et disjointes et des brins d'extrémité proximale qui se rejoignent en formant une boucle fermée.

Selon une variante de réalisation spécifique, l'alésage de l'élément interne est obturé à son extrémité proximale par un bouchon contre lequel les branches latérales de l'épingle sont en appui.

Dans cette variante, le dispositif de verrouillage de l'invention comporte un ressort hélicoïdal monté entre la base du bouton-poussoir et le bouchon et au centre duquel s'étendent les branches latérales de l'épingle.

De préférence dans ce cas, le dispositif comporte une rondelle qui est disposée entre la base du bouton-poussoir et la spire d'extrémité du ressort et qui est pourvue d'un orifice au travers duquel passent les brins d'extrémité proximale de l'épingle.

Selon une autre variante de réalisation, le bouton-poussoir présente un corps cylindrique pourvu d'une tête de section réduite qui fait saillie à l'extérieur de l'alésage en position de détente de l'épingle.

Selon encore une autre variante de réalisation du dispositif, le corps du bouton-poussoir s'étend longitudinalement de part et d'autre des fentes de l'élément interne et comporte des ouïes au travers desquelles passent les branches latérales de l'épingle.

Selon encore une autre variante de réalisation, l'alésage intérieur débouche à l'extérieur à son extrémité distale via une cavité de section hexagonale.

Selon une variante de réalisation alternative, l'alésage intérieur débouche à l'extérieur à son extrémité distale au centre d'un écrou de manœuvre de section hexagonale solidaire dudit élément interne.

De préférence, la tête du bouton-poussoir fait alors saillie au centre de l'écrou de manœuvre.

Selon une variante de réalisation spécifique, il est prévu que l'élément externe présente un nombre pair d'encoches pour le blocage des branches latérales de l'épingle.

Selon une variante spécifique du dispositif de l'invention, l'épingle est réalisée en deux parties articulées. Dans ce cas, le dispositif est équipé d'une cale dynamique pourvue de saignées latérales recevant les branches latérales de l'épingle articulée et qui est disposée au contact de la base du bouton-poussoir.

Un autre objet de l'invention est un système mécanique pourvu d'un organe de réglage comportant un élément externe, solidaire du système, pourvu sur sa paroi interne d'un taraudage et destiné à recevoir un élément interne mobile pourvu d'un filetage extérieur et d'un alésage intérieur, lesdits éléments interne et externe coopérant pour assurer, par vissage, un réglage de la position dudit système, caractérisé en ce que ledit système est équipé d'un dispositif tel que défini ci-dessus pour assurer le verrouillage de son réglage.

Encore un autre objet de l'invention est une utilisation du dispositif défini ci-dessus pour le verrouillage du réglage de la position d'un ouvrant dans son bâti d'encadrement.

Un dernier objet de l'invention est un aéronef équipé d'au moins un dispositif de verrouillage présentant les caractéristiques énoncées ci-dessus pour le réglage de la position de montage des portes sur le fuselage.

Le dispositif de verrouillage de l'invention permet d'assurer, de façon automatique, avec des moyens standards et donc économiques, un blocage efficace, stable et précis de l'organe réalisant habituellement le réglage de la position ou la fixation de divers composants de systèmes mécaniques même complexes.

Grâce au dispositif de l'invention, un verrouillage du réglage peut être obtenu de façon aisée et rapide malgré la présence d'un environnement très étroit du système où l'espace disponible qui est alors restreint interdit généralement l'emploi d'outils lourds et encombrants.

En outre, avec l'invention, et dans le cas où le verrouillage n'aurait pas été complètement finalisé, tout déplacement relatif ultérieur entre l'écrou périphérique taraudé formant l'élément externe et l'élément intérieur fileté serait, in fine, bloqué automatiquement par l'engagement de l'épaulement des branches latérales de l'épingle dans l'une des encoches adjacentes, suivante ou précédente, du fait, notamment, de l'élasticité et de la mémoire de forme spécifiques de l'épingle. Par conséquent, l'invention apporte une sécurisation renforcée du réglage.

L'invention est applicable à tout type de système mécanique intégrant un organe de réglage ou de fixation fileté qu'il est nécessaire ou utile de verrouiller. Ainsi, l'invention peut s'appliquer, notamment, sur tout ouvrant, par exemple, une porte d'aéronef, de hangar, et de tout type de bâtiment ou d'engin mobile.

### PRÉSENTATION DES FIGURES

D'autres données, caractéristiques et avantages de la présente invention apparaîtront à la lecture de la description non limitée qui suit, en référence aux figures annexées qui s'étendent dans un plan horizontal et représentent, respectivement :
[Figure 1] est une vue en coupe longitudinale d'un premier mode de réalisation de l'organe de réglage selon l'invention en position de verrouillage.
[Figure 2] est une vue en coupe longitudinale de l'organe de réglage de la figure 1 avec le dispositif en position de réglage.
[Figure 3] est une vue en perspective de l'élément externe intégré dans le dispositif de verrouillage de l'organe de réglage selon l'invention.
[Figure 4] une vue de côté de l'épingle déformable du dispositif de verrouillage de l'organe de réglage selon l'invention dans trois situations, à l'état libre, intégrée sous tension dans le dispositif de verrouillage respectivement, en position de verrouillage et en position de réglage.
[Figure 5] est une vue en perspective du bouton-poussoir du dispositif de verrouillage de l'organe de réglage selon l'invention.
[Figure 6] est une vue en coupe de l'élément interne adapté et intégré au dispositif de verrouillage de l'organe de réglage selon l'invention.
[Figure 7] est une vue partielle en perspective d'un second mode de réalisation de l'organe de réglage selon l'invention en position de verrouillage.
[Figure 8] est une vue partielle en perspective du mode de réalisation de l'organe de réglage de la figure 7 en position de réglage.
[Figure 9] est une vue en perspective éclatée d'une variante de réalisation de l'épingle intégrée au dispositif de verrouillage de l'organe de réglage de l'invention.
[Figure 10] est une vue en coupe longitudinale d'un autre mode de réalisation de l'organe de réglage selon l'invention comportant la variante d'épingle de la figure 9 en position de verrouillage.
[Figure 11] est une vue en coupe longitudinale du mode de réalisation de l'organe de réglage de la figure 10 en position de déverrouillage manuel.
[Figure 12] est une vue en coupe longitudinale du mode de réalisation de l'organe de réglage de la figure 10 en position de réglage manuel.
[Figure 13] est une vue partielle en perspective éclatée d'une variante de réalisation du dispositif de l'organe de réglage de l'invention.

### DESCRIPTION DÉTAILLÉE

Pour plus de clarté, les éléments identiques ou similaires sont repérés par les mêmes signes de référence sur l'ensemble des figures.

Naturellement, les modes de réalisation de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

L'invention concerne le domaine du réglage de la position d'un système mécanique au moyen d'un organe de réglage constitué d'un élément interne fileté coopérant par vissage avec un élément externe complémentaire taraudé solidaire du système. En particulier, l'invention s'intéresse au verrouillage de ce réglage afin de sécuriser la position finale du système mécanique dans le temps.

De tels systèmes mécaniques sont typiquement des ouvrants, par exemple, des portes dont la position relativement à un bâti d'encadrement doit être ajustée afin d'obtenir une fermeture et une ouverture correctes et une étanchéité satisfaisante.

Cet objectif de verrouillage et de sécurisation automatiques du réglage de la position et de l'orientation d'une porte est crucial lorsque cette porte est montée dans un encadrement réalisé dans la carlingue du fuselage d'un aéronef et est donc soumise à de fortes contraintes.

Toutefois, l'invention peut s'appliquer aussi au verrouillage d'organes de réglage intégrés à des systèmes de fixation ou d'assemblage mécanique.

Dans la description qui va suivre, le terme « distal » correspond au côté situé à l'extérieur de l'élément interne de l'organe de réglage tandis que le terme « proximal » correspond au côté opposé, c'est-à-dire, au côté situé à proximité immédiate du système ou solidaire du système. En conséquence, le terme « intermédiaire » ou « médian » correspond à une position située entre la position distale et la position proximale.

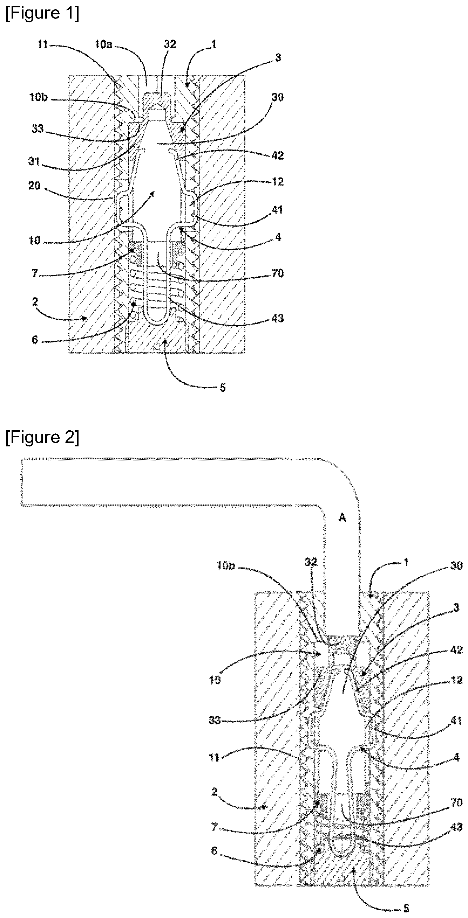

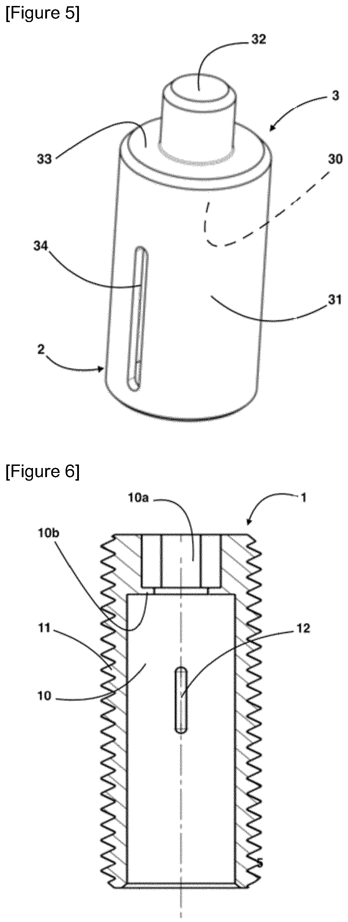

Comme illustré, notamment, par les figures 1 et 2 en coupe, le dispositif de verrouillage de l'organe de réglage de l'invention est destiné à équiper l'organe de réglage comportant un élément interne cylindrique 1 éventuellement relié à un bâti et pourvu, de manière traditionnelle, d'un filetage extérieur 11 et d'un alésage intérieur 10. Un tel élément est constitué, par exemple, d'une tige filetée et évidée ou d'une vis creuse, comme illustré en vue de détail par la figure 6.

Cet élément mâle 1 est destiné à être introduit dans un élément externe femelle 2 taraudé (réalisé, par exemple, sous forme d'un écrou périphérique) qui est solidaire ou en prise avec un système mécanique (non représenté ici) pour assurer, par vissage, un réglage de la position de ce système relativement à un bâti ou le réglage de l'assemblage de divers composants de ce système. L'élément 1 forme donc la partie mobile de l'organe de réglage du système tandis que l'élément 2 en constitue la partie fixe. Toutefois, dans une variante non représentée, ces éléments 1, 2 pourraient être inversés de façon à ce que l'élément 1 forme la partie fixe et l'élément 2 la partie mobile.

Il se trouve que, dans certaines configurations, l'espace disponible dans l'environnement du système mécanique est très restreint ou est encombré par la présence d'obstacles structurels. Dans ces conditions, il devient très difficile d'effectuer le verrouillage du réglage, en particulier, lorsqu'il est nécessaire d'utiliser des outils de dimensions importantes et/ou d'effectuer des mouvements de rotation de ces outils avec une grande amplitude.

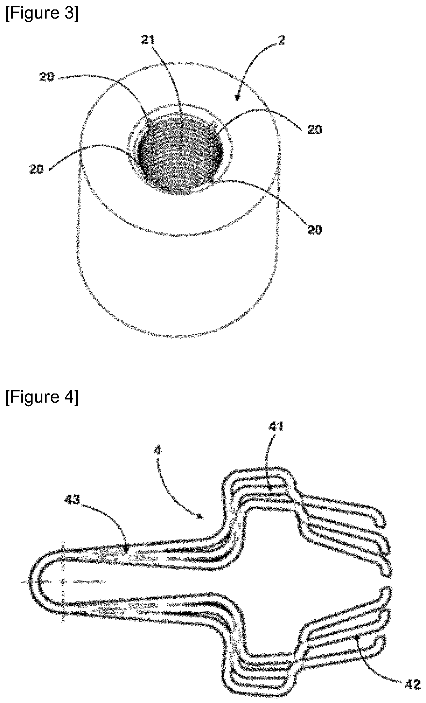

Dans ce contexte, l'invention apporte un verrouillage automatique réalisé au moyen d'un dispositif comportant un bouton-poussoir 3 (représenté en détail sur la figure 5), logé de manière coulissante dans l'alésage 10 de l'élément interne fileté 1 et coiffant une épingle 4 (représentée en détail sur la figure 4) présentant deux branches latérales. De préférence, l'épingle 4 est élastiquement déformable et forme un ressort à mémoire de forme.

Le bouton-poussoir 3 comporte une concavité interne 30 de profil cylindro-conique ou au moins partiellement conique dont la paroi prend appui sur les brins d'extrémité distale 42 des branches latérales de l'épingle élastique 4.

Ce bouton-poussoir 3 présente un corps cylindrique 31 pourvu d'une tête 32 de section réduite (figure 5) qui fait saillie à l'extérieur de l'alésage 10 en position de repos (verrouillage) de l'épingle 4, comme illustré par la figure 1. Dans cette position, l'épaulement 33 du bouton-poussoir 3 qui se trouve à la jonction entre le corps 31 et la tête 32, se trouve en butée contre un rétreint interne 10b de l'alésage 10 de l'élément interne fileté 1.

Les branches latérales de l'épingle 4 présentent des brins intermédiaires formant un épaulement 41 qui est destiné à venir en regard de fentes longitudinales 12 réalisées au travers de la paroi de l'élément interne fileté 1.

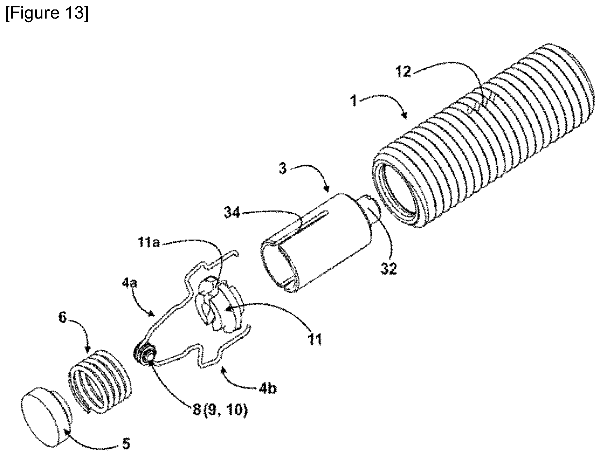

Cet épaulement intermédiaire 41 présente un profil partiellement rectangulaire avec un tronçon longitudinal qui est sensiblement parallèle à l'axe commun de l'élément fileté 1 et de l'écrou 2. Les brins 43 d'extrémité proximale de l'épingle 4 se rejoignent, quant à eux, en formant, dans le mode de réalisation des figures 1, 2 et 4, une boucle fermée dont seule la portion assurant la liaison avec les brins intermédiaires 41 se déforme. Une variante de réalisation de l'invention dans laquelle les branches latérales de l'épingle 4 sont indépendantes et réunies au niveau des brins 43 sera décrite plus loin et illustrée, notamment, par la figure 13.

En position de détente de l'épingle 4, et donc en position de verrouillage du dispositif, l'épaulement 41 s'élargit et vient s'engager et se bloquer dans des encoches 20 ménagées sur la paroi interne de l'élément externe périphérique 2 en étant entraîné par les brins d'extrémité distale 42 qui s'écartent après le réglage quand le bouton-poussoir 1 est relâché.

Dans le mode de réalisation illustré par les figures 1 et 2, le corps 31 du bouton-poussoir 3 s'étend longitudinalement de part et d'autre des fentes 12 de l'élément fileté 1 destinées à la retenue des branches latérales de l'épingle 4. Dans ce cas, le bouton-poussoir 3 présente aussi, latéralement et de part et d'autre du corps 31, des ouïes 34 permettant le passage de l'épaulement 41 des branches latérales de l'épingle 4, comme illustré par la figure 5. Les dimensions respectives des fentes 12 et des ouïes 34 sont adaptées aux dimensions de l'épaulement 41 de l'épingle 4 pour autoriser son débattement lors des transitions entre les phases de réglage et de verrouillage.

Une fois enfermée dans l'alésage 10 de l'élément interne fileté 1, l'épingle 4 est, de préférence, légèrement sous tension, même en position de verrouillage, en raison, d'une part, du contact d'appui avec la paroi de la cavité 30 du bouton-poussoir 3 et, d'autre part, de la compression transversale des branches latérales imposée par les dimensions des encoches 20 de l'élément externe 2.

Les brins 42 d'extrémité distale de l'épingle 4 sont non-parallèles et disjoints de telle sorte qu'un appui sur la tête 32 du bouton-poussoir 3 provoque le glissement de ces brins de façon guidée contre la paroi conique de la cavité 30 et entraîne leur rapprochement ainsi que le repli de l'épaulement 41 situé sur les brins intermédiaires. La figure 4 représente les différents états de l'épingle élastique 4, respectivement, à l'état libre, en position de verrouillage dans le dispositif et en position de réglage. L'épingle 4 est réalisée, de préférence, en fil d'acier inoxydable à ressorts.

Selon l'invention, il est prévu que l'élément externe périphérique 2 présente un nombre pair d'encoches 20 pour le blocage des branches latérales de l'épingle 4. Dans le mode de réalisation de la figure 3, l'élément externe 2 présente deux paires d'encoches 20 diamétralement opposés réalisées sous forme de saignées longitudinales dans les filets du taraudage 21. Le nombre de paires d'encoches 20 est toutefois fonction de la précision souhaitée pour le réglage. Parallèlement, le filetage 11 de l'élément interne 1 n'est pas nécessaire sur toute la longueur de cette pièce.

Pour permettre le réglage, on effectue le déplacement axial en translation du bouton-poussoir 3 à l'intérieur de l'alésage 10 pour commander la tension de l'épingle 4 en vue d'assurer le déverrouillage.

Cette opération est mise en œuvre en effectuant conjointement, un appui sur le bouton-poussoir 3 depuis l'extérieur de l'alésage 10 et une rotation de l'élément interne fileté 1 à l'aide d'un outil manuel (tel qu'une clé Allen A - figure 2). Le déplacement du bouton 3 en translation dans l'alésage 10 entraîne ainsi la compression de l'épingle 4. Compte tenu de la forme spécifique et de l'élasticité de l'épingle 4, cette déformation forcée provoque la rétractation des branches latérales de l'épingle 4 (et principalement celui des brins intermédiaires formant l'épaulement 41) vers l'intérieur de l'élément interne fileté 1. Les brins intermédiaires s'échappent alors des encoches 20 en libérant ainsi l'élément fileté mâle 1 qui peut alors tourner librement dans l'élément externe femelle 2 qui quant à lui reste fixe.

Une fois le réglage effectué, le retrait de l'outil manuel A provoque la détente et le déploiement vers l'extérieur des branches latérales (du fait de l'élasticité et de la mémoire de forme de l'épingle 4) et leur retour automatique dans les encoches 20 de l'élément externe 2. Conjointement, le bouton-poussoir 3 reprend sa position initiale en butée contre le rétreint 10b de l'alésage 10.

Si, toutefois, les brins intermédiaires 41 des branches latérales ne se trouvaient pas directement en vis-à-vis des encoches 20, une légère rotation de l'élément interne fileté 1 sur quelques millimètres (et sans appui sur le bouton 3), permet de disposer ces brins en regard des encoches 20 les plus proches et de finaliser le verrouillage. La remontée et la mise en butée du bouton 3 dans l'alésage 10 permet de confirmer visuellement le verrouillage final.

Par conséquent, dans le cas où le verrouillage ne serait pas complètement effectué, tout déplacement relatif ultérieur entre l'élément externe 2 et l'élément interne 1 serait stoppé automatiquement au passage de l'épaulement 41 en regard de l'encoche 20 suivante ou précédente, grâce à l'élasticité de l'épingle 4.

Ainsi, en position de verrouillage, l'épaulement intermédiaire 41 de l'épingle 4 forme un obstacle qui s'interpose dans la liaison par filetage entre l'élément mâle 1 et l'élément femelle 2, empêchant ces deux pièces de tourner relativement l'une par rapport à l'autre, comme représenté dans la position illustrée par la figure 1.

Selon une variante de réalisation spécifique, l'alésage 10 de l'élément interne 1 est obturé à son extrémité proximale par un bouchon 5 contre lequel les brins 43 d'extrémité proximale de l'épingle 4 sont en appui.

Toujours dans ce mode de réalisation, le dispositif de verrouillage de l'organe de réglage de l'invention comporte, en outre, un ressort hélicoïdal 6 de compression monté entre la base du bouton-poussoir 3 et le bouchon 5 et au centre duquel s'étendent les brins 43 d'extrémité proximale de l'épingle 4. Le ressort 6 maintient le bouton-poussoir 3 en position distale, et en butée contre l'épaulement 10b de l'alésage 10, en favorisant ainsi l'épingle élastique 4 à retrouver sa position détendue de verrouillage, ses branches latérales restant coincées dans les deux encoches en vis à vis de l'élément externe 2.

De préférence, le dispositif comporte une rondelle 7 qui est disposée entre la base du bouton-poussoir 3 et la spire d'extrémité du ressort 6. Cette rondelle 7 est pourvue d'un orifice 70 au travers duquel passent les brins 43 d'extrémité proximale de l'épingle 4, comme illustré par les figures 1 et 2.

Selon une première variante de réalisation du dispositif de l'organe de réglage de l'invention illustrée par les figures 1 et 2, l'alésage intérieur 10 débouche à l'extérieur de l'élément interne 1 à son extrémité distale via une cavité 10a de section hexagonale. De préférence, cette section correspond à un calibre d'une clé Allen.

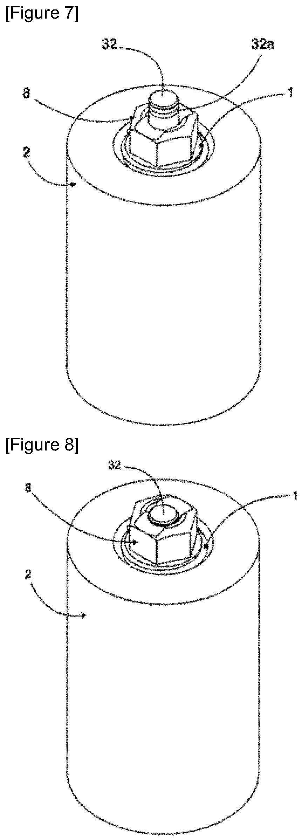

Selon une autre variante de réalisation illustrée par les figures 7 et 8, l'alésage intérieur 10 débouche à l'extérieur de l'élément interne 1 à son extrémité distale, au centre d'un écrou 8 de manœuvre de section hexagonale solidaire de l'élément 1. De préférence, la tête 32 du bouton-poussoir 3 est rétractable et fait alors saillie au centre de l'écrou 8 de manœuvre. Cette tête 32 est munie de traits 32a fournissant une indication sur l'activation du verrouillage.

Dans cette variante, l'opérateur utiliserait alors une clé plate à œil ou une clé à pipe ajourée en lieu et place de la clé Allen A utilisée dans le mode de réalisation de la figure 1. Mais, selon d'autres variantes, la tête 32 protubérante pourrait aussi présenter une section à géométrie bi-hexagonale ou toute autre géométrie susceptible de coopérer avec un outil manuel. La tête 32 rétractable serait mise en position saillante pendant la phase de réglage (figure 7) et serait rentrée une fois ce dernier terminé pour assurer son verrouillage (figure 8).

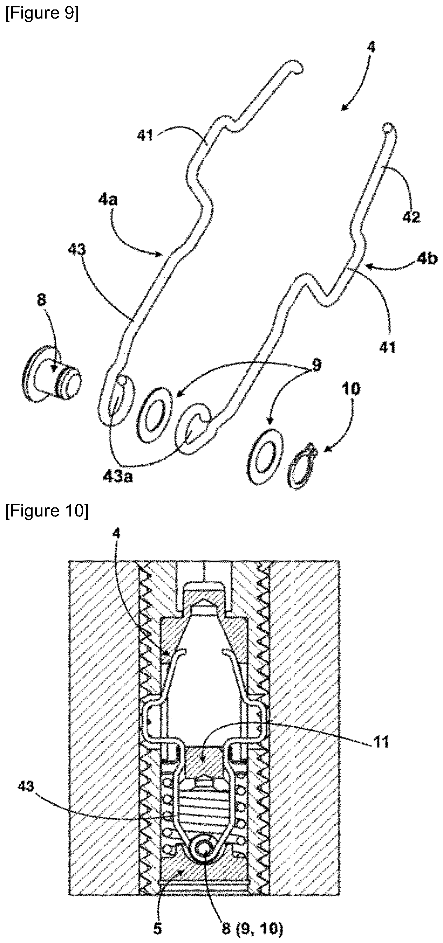

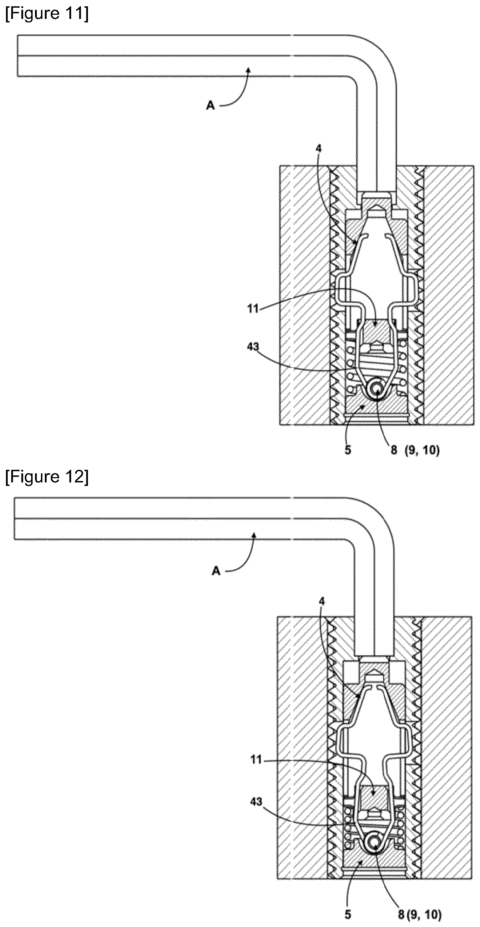

Les figures 9 à 13 illustrent un autre mode de réalisation du dispositif de verrouillage de l'organe de réglage de l'invention comportant une variante de l'épingle 4 décrite ci-dessus. Cette variante permet d'éviter les risques de déformation de l'épingle lors de son installation dans le dispositif et lors des opérations de réglage manuel (par exemple, au moyen d'une clé Allen A).

Cette épingle, représentée en perspective éclatée sur la figure 9, comprend des branches latérales indépendantes réalisées ici sous forme de deux parties 4a, 4b qui sont assemblées au moyen d'un rivet 8 (ou de tout autre organe de liaison pivotante). La tige de ce rivet est engagée dans des boucles 43a ménagées à l'extrémité des brins d'extrémité proximale 43 des branches et coopère avec un jeu de rondelles 9 et un collier de retenue 10.

Le rivet 8 forme ainsi une articulation permettant un débattement des deux parties 4a, 4b de l'épingle 4 l'une par rapport à l'autre autour de l'axe de rotation matérialisé par la tige du rivet 8. L'extrémité de l'épingle articulée 4 est toujours en appui sur le bouchon 5, comme illustré par les figures 10 à 12, dans les positions, respectivement, de verrouillage, de déverrouillage et de réglage.

Afin d'assurer le maintien de l'épingle articulée 4, l'invention prévoit d'intégrer une cale dynamique 11 entre le ressort 6 et la base du bouton-poussoir 3. Cette cale 11, qui est réalisée d'une seule pièce, peut se déplacer en translation axiale dans l'élément interne 1 tout en n'entravant pas les fentes 12, La cale 11 comporte deux saignées latérales 11a (visibles sur la figure 13) recevant les brins d'extrémité proximale 43 respectifs des parties 4a, 4b de l'épingle 4 de façon coulissante. Ces saignées 11a participent ainsi au blocage de l'épingle 4 tant pendant le réglage du dispositif qu'en position finale de verrouillage.

## Revendications

1. Organe de réglage à verrouillage automatique d'un système mécanique, comportant un élément interne mobile (1) et un élément externe (2) solidaire du système mécanique et pourvu sur sa paroi interne d'un taraudage destiné à recevoir l' élément interne mobile (1) qui est pourvu d'un filetage extérieur (11) et d'un alésage intérieur (10), lesdits éléments interne (1) et externe (2) coopérant par vissage pour assurer un réglage de la position dudit système, l'organe comportant un dispositif de verrouillage automatique muni d'une épingle déformable (4) formant ressort et d'un bouton-poussoir (3) logé de manière coulissante dans ledit alésage (10) de l'élément interne (1) et coiffant l' épingle déformable (4), cette épingle (4) étant pourvue de branches latérales qui sont retenues dans des fentes (12) réalisées en vis à vis au travers de la paroi dudit élément interne (1) et qui viennent, en position de détente de l'épingle, se bloquer dans des encoches (20) ménagées sur la paroi interne dudit élément externe (2), **caractérisé en ce que** les fentes (12) sont des fentes longitudinales et ledit bouton-poussoir (3) comporte une concavité interne (30) de profil au moins partiellement cylindro-conique dont la paroi prend appui sur les branches latérales de l'épingle (4).

2. Organe selon la revendication 1, **caractérisé en ce que** les branches latérales de ladite épingle (4) présentent un épaulement (41) entre des brins (42) d'extrémité distale qui sont non-parallèles et disjoints et des brins (43) d'extrémité proximale qui se rejoignent en formant une boucle fermée.

3. Organe selon l'une des revendications précédentes, **caractérisé en ce que** ledit alésage (10) de l'élément interne (1) est obturé à son extrémité proximale par un bouchon (5) contre lequel les branches latérales de l'épingle élastique (4) sont en appui.

4. Organe selon la revendication précédente, **caractérisé en ce qu'**il comporte un ressort hélicoïdal (6) monté entre la base du bouton-poussoir (3) et le bouchon (5) et au centre duquel s'étendent les branches latérales de l'épingle élastique (4).

5. Organe selon les revendications 2 et 4, **caractérisé en ce qu'**il comporte une rondelle (7) qui est disposée entre la base du bouton-poussoir (3) et la spire d'extrémité du ressort (6) et qui est pourvue d'un orifice (70) au travers duquel passent les brins (43) d'extrémité proximale de l'épingle (4).

6. Organe selon l'une des revendications précédentes, **caractérisé en ce que** ledit bouton-poussoir (3) présente un corps (31) cylindrique pourvu d'une tête (32) de section réduite qui fait saillie à l'extérieur de l'alésage (10) en position de détente de l'épingle déformable (4).

7. Organe selon la revendication précédente, **caractérisé en ce que** le corps (31) dudit bouton-poussoir (3) s'étend longitudinalement de part et d'autre des fentes (12) de l'élément interne (1) et comporte des ouïes (34) au travers desquelles passent les branches latérales de l'épingle (4).

8. Organe selon l'une des revendications précédentes, **caractérisé en ce que** ledit alésage intérieur (10) débouche à l'extérieur de l'élément interne (1) à son extrémité distale via une cavité (10a) de section hexagonale.

9. Organe selon l'une des revendications 1 à 7, **caractérisé en ce que** ledit alésage intérieur (10) débouche à l'extérieur de l'élément interne (1) à son extrémité distale au centre d'un écrou (8) de manœuvre de section hexagonale solidaire dudit élément interne (1).

10. Organe selon les revendications 6 et 9, **caractérisé en ce que** la tête (32) du bouton-poussoir (3) fait saillie au centre de l'écrou (8) de manœuvre.

11. Organe selon l'une des revendications précédentes, **caractérisé en ce que** ledit élément externe (2) présente un nombre pair d'encoches (20).

12. Organe selon l'une des revendications précédentes, **caractérisé en ce que** ladite épingle (4) est réalisée en deux parties (4a, 4b) articulées.

13. Organe selon la revendication précédente, **caractérisé en ce qu'**il comporte une cale dynamique (11) pourvue de saignées latérales (11a) recevant les branches latérales de l'épingle articulée (4) et qui est disposée au contact de la base du bouton-poussoir (3).

14. Système mécanique **caractérisé en ce que** ledit système est équipé d'un organe de réglage à verrouillage automatique selon l'une des revendications précédentes assurant le verrouillage de son réglage.

15. Utilisation de l'organe de réglage à verrouillage automatique selon l'une des revendications 1 à 12 pour le verrouillage du réglage de la position d'un ouvrant dans son bâti d'encadrement.

16. Aéronef équipé d'au moins un organe de réglage selon l'une des revendications 1 à 13 pour le réglage de la position de montage des portes dans un encadrement ménagé sur le fuselage.

## Patentansprüche

1. Einstellvorrichtung mit automatischer Verriegelung eines mechanischen Systems, umfassend ein bewegliches Innenelement (1) und ein Außenelement (2), das mit dem mechanischen System fest verbunden ist und an seiner Innenwand über ein Innengewinde verfügt, das dazu bestimmt ist, das bewegliche Innenelement (1) aufzunehmen, das über ein Außengewinde (11) und eine Innenbohrung (10) verfügt, wobei das Innenelement (1) und das Außenelement (2) durch Verschraubung zusammenwirken, um eine Einstellung der Position des Systems zu gewährleisten, wobei die Vorrichtung eine automatische Verriegelungseinrichtung umfasst, die mit einer verformbaren Spange (4), die eine Feder bildet, und einem Druckknopf (3), der verschiebbar in der Bohrung (10) des Innenelements (1) aufgenommen ist und die verformbare Spange (4) abdeckt, versehen ist, wobei diese Spange (4) über Seitenarme verfügt, die in Schlitzen (12), die gegenüberliegend durch die Wand des Innenelements (1) hindurch eingerichtet sind, gehalten werden und in der Entspannungsposition der Spange in Nuten (20) einrasten, die an der Innenwand des Außenelements (2) ausgebildet sind, **dadurch gekennzeichnet, dass** die Schlitze (12) Längsschlitze sind und dass der Druckknopf (3) eine Innenhöhlung (30) mit einem mindestens teilweise zylindrisch-konischen Profil umfasst, deren Wand an den Seitenarmen der Spange (4) anliegt.

2. Vorrichtung nach Anspruch 1, **dadurch gekennzeichnet, dass** die Seitenarme der Spange (4) zwischen Strängen (42) am distalen Ende, die nicht parallel und getrennt sind, und Strängen (43) am proximalen Ende, die verbunden sind und dabei eine geschlossene Schleife bilden, einen Vorsprung (41) aufweisen.

3. Vorrichtung nach einem der vorhergehenden Ansprüche, **dadurch gekennzeichnet, dass** die Bohrung (10) des Innenelements (1) an ihrem proximalen Ende durch einen Stopfen (5) verschlossen ist, an dem die Seitenarme der elastischen Spange (4) anliegen.

4. Vorrichtung nach dem vorhergehenden Anspruch, **dadurch gekennzeichnet, dass** sie eine Schraubenfeder (6) umfasst, die zwischen der Basis des Druckknopfs (3) und dem Stopfen (5) montiert ist und in deren Mitte sich die Seitenarme der elastischen Spange (4) erstrecken.

5. Vorrichtung nach den Ansprüchen 2 und 4, **dadurch gekennzeichnet, dass** sie eine Scheibe (7) umfasst, die zwischen der Basis des Druckknopfs (3) und der Endwindung der Feder (6) angeordnet ist und über eine Öffnung (70) verfügt, durch die die Stränge (43) des proximalen Endes der Spange (4) hindurchgehen.

6. Vorrichtung nach einem der vorhergehenden Ansprüche, **dadurch gekennzeichnet, dass** der Druckknopf (3) einen zylindrischen Körper (31) aufweist, der über einen Kopf (32) mit reduziertem Querschnitt verfügt, der in der Entspannungsposition der verformbaren Spange (4) auf der Außenseite der Bohrung (10) vorsteht.

7. Vorrichtung nach dem vorhergehenden Anspruch, **dadurch gekennzeichnet, dass** sich der Körper (31) des Druckknopfs (3) auf beiden Seiten der Schlitze (12) des Innenelements (1) längs erstreckt und Spalte (34) umfasst, durch die die Seitenarme der Spange (4) hindurchgehen.

8. Vorrichtung nach einem der vorhergehenden Ansprüche, **dadurch gekennzeichnet, dass** die Innenbohrung (10) an ihrem distalen Ende über einen Hohlraum (10a) mit sechseckigem Querschnitt auf der Außenseite des Innenelements (1) mündet.

9. Vorrichtung nach einem der Ansprüche 1 bis 7, **dadurch gekennzeichnet, dass** die Innenbohrung (10) an ihrem distalen Ende in der Mitte einer Betätigungsmutter (8) mit sechseckigen Querschnitt, die mit dem Innenelement (1) fest verbunden ist, auf der Außenseite des Innenelements (1) mündet.

10. Vorrichtung nach den Ansprüchen 6 und 9, **dadurch gekennzeichnet, dass** der Kopf (32) des Druckknopfs (3) in der Mitte der Betätigungsmutter (8) vorsteht.

11. Vorrichtung nach einem der vorhergehenden Ansprüche, **dadurch gekennzeichnet, dass** das Außenelement (2) eine gerade Anzahl von Nuten (20) aufweist.

12. Vorrichtung nach einem der vorhergehenden Ansprüche, **dadurch gekennzeichnet, dass** die Spange (4) aus zwei gelenkig beweglichen Teilen (4a, 4b) besteht.

13. Vorrichtung nach dem vorhergehenden Anspruch, **dadurch gekennzeichnet, dass** sie ein dynamisches Passstück (11) umfasst, das über seitliche Einschnitte (11a) verfügt, die die Seitenarme der gelenkig beweglichen Spange (4) aufnehmen, und das in Kontakt mit der Basis des Druckknopfs (3) angeordnet ist.

14. Mechanisches System, **dadurch gekennzeichnet, dass** das System mit einer Einstellvorrichtung mit automatischer Verriegelung nach einem der vorhergehenden Ansprüche ausgerüstet ist, die die Verriegelung seiner Einstellung gewährleistet.

15. Verwendung der Einstellvorrichtung mit automatischer Verriegelung nach einem der Ansprüche 1 bis 12 zur Verriegelung der Einstellung der Position eines Öffnungselements in seiner Rahmenfassung.

16. Flugzeug, das mit mindestens einer Einstellvorrichtung nach einem der Ansprüche 1 bis 13 zur Einstellung der Montageposition der Türen in einem an dem Rumpf eingerichteten Rahmen ausgerüstet ist.

## Claims

1. An automatically locking adjustment mechanism for a mechanical system, comprising a movable inner element (1) and an outer element (2) integral with the mechanical system and provided on its inner wall with a threaded bore intended to receive the movable inner element (1), which is provided with an external thread (11) and an internal bore (10), said internal (1) and external (2) elements cooperating by screwing to ensure adjustment of the position of said system, the assembly comprising an automatic locking device fitted with a deformable pin (4) acting as a spring and a push-button (3) slidably housed within said bore (10) of the inner element (1) and overlying the deformable pin (4), this pin (4) being provided with lateral legs which are retained in slots (12) formed opposite one another through the wall of said inner element (1) and which, when the pin is in the released position, lock into notches (20) formed on the inner wall of said outer element (2), **characterised in that** the slots (12) are longitudinal slots and said push-button (3) comprises an internal concavity (30) of at least partially cylindrical-conical profile, the wall of which bears against the lateral legs of the pin (4).

2. A component according to claim 1, **characterised in that** the lateral branches of said pin (4) have a shoulder (41) between distal end strands (42) which are non-parallel and disjointed and proximal end strands (43) which join to form a closed loop.

3. A device according to one of the preceding claims, **characterised in that** said bore (10) of the inner element (1) is closed at its proximal end by a plug (5) against which the lateral legs of the spring pin (4) bear.

4. A device according to the preceding claim, **characterised in that** it comprises a coil spring (6) mounted between the base of the push-button (3) and the plug (5), and through the centre of which the lateral arms of the spring pin (4) extend.

5. A device according to claims 2 and 4, **characterised in that** it comprises a washer (7) which is disposed between the base of the push-button (3) and the end coil of the spring (6) and which is provided with an orifice (70) through which the proximal end strands (43) of the spring pin (4) pass.

6. A device according to one of the preceding claims, **characterised in that** said push-button (3) has a cylindrical body (31) provided with a head (32) of reduced cross-section which projects outside the bore (10) in the released position of the deformable pin (4).

7. A component according to the preceding claim, **characterised in that** the body (31) of said push-button (3) extends longitudinally on either side of the slots (12) of the internal element (1) and comprises apertures (34) through which the lateral legs of the pin (4) pass.

8. A device according to one of the preceding claims, **characterised in that** said internal bore (10) opens to the outside of the internal element (1) at its distal end via a cavity (10a) of hexagonal cross-section.

9. A component according to any one of claims 1 to 7, **characterised in that** said internal bore (10) opens to the outside of the internal element (1) at its distal end at the centre of a hexagonal-section operating nut (8) integral with said internal element (1).

10. A component according to claims 6 and 9, **characterised in that** the head (32) of the push-button (3) projects from the centre of the operating nut (8).

11. A device according to one of the preceding claims, **characterised in that** said outer element (2) has an even number of notches (20).

12. A component according to one of the preceding claims, **characterised in that** said pin (4) is formed of two articulated parts (4a, 4b).

13. A component according to the preceding claim, **characterised in that** it comprises a dynamic wedge (11) provided with lateral grooves (11a) receiving the lateral legs of the articulated pin (4) and which is arranged in contact with the base of the push-button (3).

14. A mechanical system **characterised in that** said system is equipped with an automatically locking adjustment member according to one of the preceding claims, ensuring that its setting is locked.

15. Use of the automatically locking adjustment member according to any one of claims 1 to 12 for locking the adjustment of the position of a opening element in its frame.

16. Aircraft equipped with at least one adjustment mechanism according to any one of claims 1 to 13 for adjusting the mounting position of doors in a frame provided on the fuselage.
